(19) Europäisches Patentamt
European Patent Office
Office européen des brevets

(11) **EP 2 568 272 A2**

(12) **EUROPÄISCHE PATENTANMELDUNG**

(43) Veröffentlichungstag:
**13.03.2013 Patentblatt 2013/11**

(51) Int Cl.:
***G01M 3/24*** *(2006.01)* ***F17D 5/06*** *(2006.01)*

(21) Anmeldenummer: **12005611.4**

(22) Anmeldetag: **02.08.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **25.02.2012 DE 102012003822**
**05.09.2011 DE 102011112304**

(71) Anmelder: **Seba-Dynatronic**
**Mess- und Ortungstechnik GmbH**
**96148 Baunach (DE)**

(72) Erfinder: **Schuberth, Harald, Dr.**
**96149 Breitengüßbach (DE)**

(74) Vertreter: **Riebling, Peter**
**Patentanwalt**
**Postfach 31 60**
**88113 Lindau (DE)**

(54) **Verfahren zur akustischen Ortung von Lecks in Leitungen**

(57)  Verfahren zur akustischen Ortung von Lecks in unterirdisch oder oberirdisch verlegten Leitungen, bei dem mindestens zwei das Leckgeräusch aufnehmende, und im gegenseitigem Abstand voneinander angeordnete Geräuschdatenlogger in Körperkontakt mit der zu untersuchenden Leitung gebracht werden und zeitgleich den Geräuschpegel (db) und die Frequenz einer Leckage messen, wobei die beiden gemessenen Werte der Frequenz und des Geräuschpegels zu einem einzigen Wert (ESA) zusammengefasst werden, wobei der ESA-Wert berechnet wird aus dem Dezimal-Logarithmus der Frequenz des Leckgeräusches multipliziert mit dem logarithmischen Pegelwert des Leckgeräusches multipliziert mit einem konstanten Faktor.

Fig. 1

EP 2 568 272 A2

**Beschreibung**

Die Erfindung betrifft ein Verfahren zur akustischen Ortung von Lecks in unterirdisch- oder oberirdisch verlegte Leitungen nach dem Oberbegriff des Patentanspruches 1.

Insbesondere bezieht sich die Erfindung auf ein Verfahren zur Ortung von Lecks in Trinkwasserleitungen oder in sonstigen Leitungen, die von einem flüssigen Medium durchströmt sind.

Derartige Leitungen sind beispielsweise auch ober- oder unterirdische Leitungen für die Kerosinversorgung auf Flughäfen und dergleichen Leitungen mehr, in denen ein flüssiges Medium strömt.

Das Verfahren nach dem Oberbegriff des Patentanspruches 1 geht auf ein Verfahren des gleichen Anmelder zurück und bezieht sich auf eine permanente Überwachung von Leitungen, insbesondere Trinkwasserleitungen.

Bei der Verlegung von Trinkwasserleitungen ist es bekannt, die Trinkwasserleitung an bestimmten Stellen mit Geräuschdatenloggern fest zu verbinden, sodass eine permanente Überwachung einer Trinkwasserleitung durch die dauerhaft installierten Geräuschdatenlogger gegeben ist.

Jeder Geräuschdatenlogger arbeitet vorzugsweise mit einem Beschleunigungssensor, der als Körperschallmikrophon das Körperschallgeräusch an der strömenden Leitung abhorcht, welches sich dann verändert, wenn ein Leck in der Leitung entsteht und das Leckgeräusch sich längs der zu überwachenden Leitung fortpflanzt.

Hierbei ist es bekannt, die Messwerterfassung im Geräuschdatenlogger über den Beschleunigungssensor dergestalt aufzubereiten, dass sowohl der Geräuschpegel an der zu überwachenden Leitung als auch die Frequenz des Leckgeräusches gemessen werden.

Bisher war es jedoch nicht bekannt, die beiden erfassten Werte (Geräuschpegel und Frequenz des Störgeräusches) in einen vernünftigen Zusammenhang zu bringen und hieraus eine aussagekräftige einzige Größe zu bestimmen, die beide Werte zusammenfasst.

Der Erfindung liegt deshalb die Aufgabe zugrunde, ein Verfahren zur akustischen Ortung von Lecks in Leitungen dergestalt weiterzubilden, dass die Analyse des Leckgeräusches und der damit verbundenen Frequenz für den Benutzer vereinfacht wird und gleichzeitig eine qualitative Aussage über die leckmäßige Relevanz eines gemessenen Signals getroffen werden kann.

Zur Lösung der gestellten Aufgabe ist die Erfindung durch die technische Lehre des Anspruches 1 gekennzeichnet.

Wesentliches Merkmal ist, dass der Pegel des Leckgeräusches und die Frequenz zu einem einzigen Wert zusammengefasst werden, der im Folgenden als ESA-Wert bezeichnet wird, was für "erweiterte Signalanalyse" steht.

Es hat sich nämlich herausgestellt, dass der so ermittelte ESA-Wert eine besondere Aussagekraft hat.

Der Anwender, der das Ganze bewertet, hat nicht die Möglichkeit alle Werte, also Pegelfrequenz und Lautstärke aussagekräftig zu bewerten. Hier setzt die Erfindung ein, die erstmals die Möglichkeit gibt, über eine mathematische Formel, als deren Ergebnis sich der Esa-Wert ergibt, einen umfassenden Überblick über das Leckgeschehen auf einer Karte zu verschaffen, sofern den einzelnen auf einer geografischen Umgebungskarte eingezeichneten Orten von Geräuschdatenloggern, jeweils dem dort eingezeichneten Geräuschdatenlogger ein ESA-Wert zugeordnet wird. Aus der Größe des ermittelten ESA-Wertes wird zur weiteren Verbesserung der grafischen Übersicht noch eine Farbdarstellung abgeleitet.

Niedrige ESA-Werte sind dunkelblau und gehen gleitend über in die Farbe rot bis hin zur Farbe gelb. Wenn man nun auf der Karte die einzelnen Logger sieht, und man sieht dann denjenigen, der gelb leuchtet, weiß man, dass an diesem Ort ein kritisches Leckgeräusch entstanden ist. Im Umgebungsbereich, um diesen als kritisch markierten Logger, leuchten die anderen Logger mit anderen - gegebenenfalls unkritischen - Farben, bis hin zu den Loggern, die mit blauer Farbe einen unkritischen Zustand der abgehörten Leitung anzeigen. Damit besteht die Möglichkeit, die auf der Karte markierten Logger im Umgebungsbereich des Lecks mit in die Untersuchung einzubeziehen.

Es ist nämlich nicht zu erwarten, dass der als kritisch markierte Logger genau über der Leckstelle angeordnet ist. Aus diesem Grund werden auch die Farbdarstellungen der Logger optisch ausgewertet, die sich in der Nähe des als kritisch markierten Loggers befinden. Aus den unterschiedlich farbig markierten Loggern in der Umgebung des kritischen Loggers kann dann mit hoher Wahrscheinlichkeit auf den Leckort geschlossen werden.

Die Esa-Formel mit den beiden Variablen ist demgemäß ein ausgezeichneter Indikator für die Angabe der Entfernung zum Leck.

Beide gemessenen Werte (Pegel und Frequenz) führen in die Nähe zum Leck. Je weiter man vom Leck weggeht, nimmt der Pegel ab und zum anderen werden die hohen Frequenzen immer stärker gedämpft. Das Ganze ist eine Art Tiefpassfilter. Somit ergibt sich eine erhöhte Sicherheit im Gegensatz zu einer Bewertung nur des Pegels oder nur der Frequenz.

Wenn man jedoch nur den Pegel oder nur die Frequenz für die Leckortung verwendet, liegt die Wahrscheinlichkeit eines Fehlschlusses näher. Wenn man jedoch beide Werte miteinander verknüpft, hat man eine bessere Sicherheit der Aussage für den Leckort.

Bei der Anwendung der Formel wird die Frequenz logarithmiert. Der Pegel selber ist bereits bei der Erfassung logarithmisch berechnet worden. Es handelt sich um einen Wert, der zwischen 0 und 60 dB liegen kann. Die Lautstärke ist demgemäß ein Wert zwischen 0 und 60 dB.

Die Frequenz ist vorzugsweise im Bereich von 0 - 2.500 Hz und die Lautstärke wird von 0 - 60 dB angegeben. Bei der Verwendung des absoluten Lautstärkepegels in dB bedarf es keiner Kalibrierung.

Die Messung des Leckgeräusches erfolgt über Beschleunigungssensoren, die in direktem Körperkontakt mit dem zu messenden Rohr oder dem vom Rohr abzweigenden Hydranten sind. Dabei kann das Rohr aus einem Metall- oder Kunststoffmaterial sein.

Es wird also die Energie gemessen, die von dem Beschleunigungssensor aufgenommen wird. Es handelt sich also um einen Beschleunigungswert G. Ein dB der Lautstärke entspricht ungefähr einer Beschleunigung von 10 mikro G.

Eine andere Ausführung der Erfindung sieht vor, die Lautstärke statt mit einem Beschleunigungssensor nunmehr mit einem Hydrofon zu messen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Es zeigen:

Figur 1: Schematisiert eine Anordnung nach der Erfindung bei der mit Hilfe von zwei an einer Leitung angeordneten Geräuschdatenloggern ein Leckgeräusch erfasst wird.

Figur 2: Die Anordnung nach Figur 1, wobei die Signalausgänge der Geräuschdatenlogger dargestellt sind.

Figur 3: Die Seitenansicht einer mit einem Leck behafteten Leitung in Verbindung mit einem Geräuschdatenlogger.

Figur 4: Der Vergleich der Messdistanz bei einer herkömmlichen Geräuschpegelmessung im Vergleich zum erfindungsgemäßen ESA-Wert.

Figur 5: Schematisiert ein Diagramm bei dem über die Entfernung zum Leck der Geräuschpegel und die Frequenz aufgezeichnet sind.

Figur 6: Schematisiert eine Kartendarstellung einer Umgebungskarte mit einer dort angeordneten Trinkwasserleitung mit der Angabe des Ortes verschiedener Geräuschdatenlogger und deren ESA-Werten.

Figur 7: die erfindungsgemäße ESA-Formel

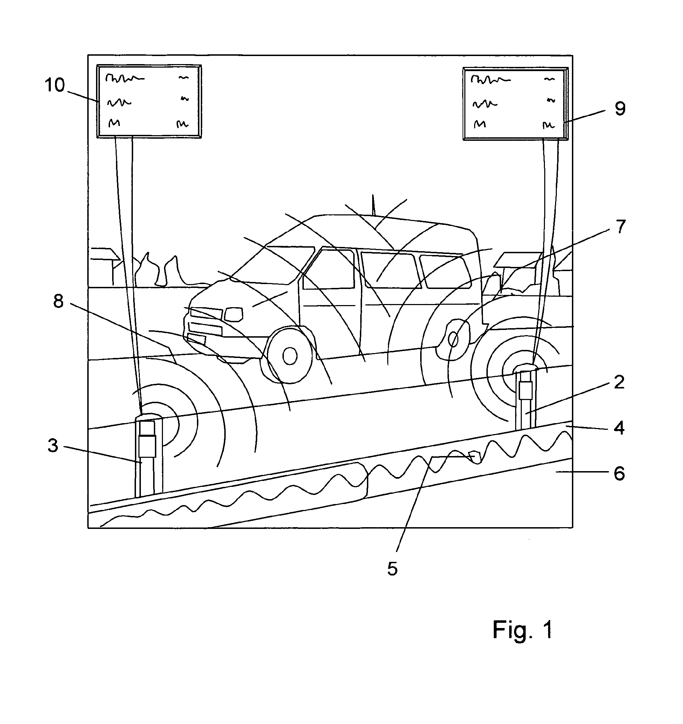

In Figur 1 ist schematisiert ein Messfahrzeug 1 dargestellt, welches über eine drahtlose Funkverbindung mit zwei Geräuschdatenloggern 2, 3 in Verbindung steht, die im Körperkontakt mit einer unterirdisch verlegten Rohrleitung 4 gebracht sind und mit Hilfe von Beschleunigungssensoren oder Hydrofonen den Geräuschpegel und die Frequenz am Mantel der Rohrleitung 4 erfassen.

Wenn beispielsweise im Bereich der Rohrleitung ein Leck 5 auftritt, dann strömt das flüssige Medium, z. B. Trinkwasser, in das Erdreich 6 und erzeugt ein Leckgeräusch, welches sich über den Mantel der Rohrleitung 4 nach beiden Seiten hin fortpflanzt.

Die beiden im Abstand voneinander angeordneten Geräuschdatenlogger 2, 3 erfassen demgemäß sowohl den Geräuschpegel des ausströmenden Lecks 5 als auch die Frequenz und senden die beiden Werte - zusammen mit weiteren Werten - wie z. B. der Logger-ID 9, 10 drahtlos an das vorbeifahrende Messfahrzeug 1.

Die hier dargestellte, drahtlose Datenübertragung 7, 8 von den Geräuschdatenloggern 2, 3 auf das Messfahrzeug 1 kann natürlich auch in anderer Weise verwirklicht werden, z.B. als Netzwerk auf einen Zentralrechner.

Statt einer drahtlosen Datenübertragung 7, 8 kann auch eine drahtgebundene Datenübertragung stattfinden.

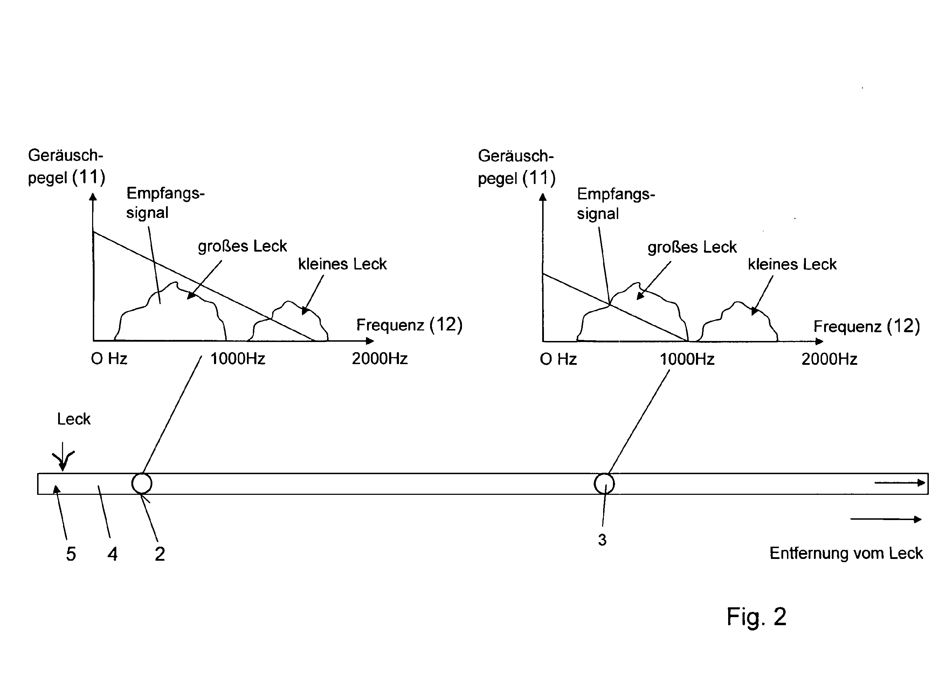

Die Figur 2 zeigt die Trinkwasserleitung 4, an dessen linken Seite das Leck 5 entstanden ist und zeigt gleichzeitig den Geräuschpegel in der Abhängigkeit von der Frequenz der beiden Geräuschdatenlogger 2, 3.

Hierbei wird erkennbar, dass je weiter der Geräuschdatenlogger 3 vom Leck 5 entfernt ist, dass kleine Lecks nicht mehr erkannt werden können, denn das Empfangssignal des Geräuschdatenloggers 3 liegt unterhalb der Erkennungsschwelle.

Der Geräuschdatenlogger 2, der nächst dem Leck 5 angeordnet ist, kann sowohl ein großes Leck als auch ein kleines Leck erkennen, weil das Empfangssignal im höheren Frequenzbereich auch das kleine Leck erkennbar macht.

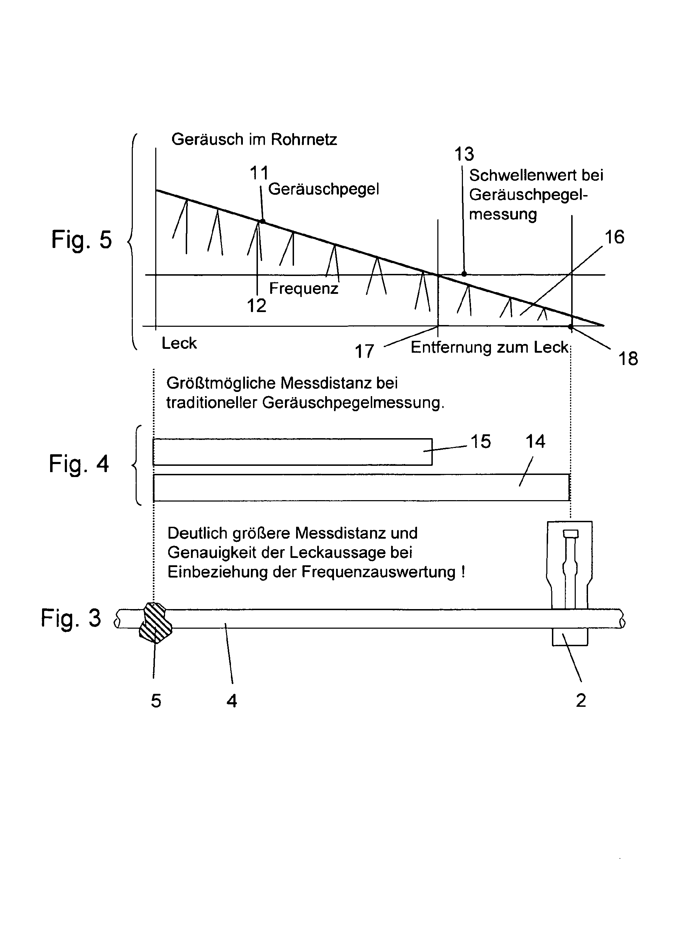

Die Figuren 3 bis 5 zeigen nun die Vorteile des erfindungsgemäßen Verfahrens gegenüber dem Stand der Technik.

In Figur 3 ist wiederum - gemäß Figur 2 - auf der linken Seite der Rohrleitung 5 das zu entdeckende Leck 5 angeordnet, wobei die Datenerfassung am Geräuschdatenlogger 2 dargestellt wird.

In der darüber liegend angeordneten Figur 4 ist mit dem Pegelwert 15 angegeben, dass bei einer traditionellen Geräuschpegelmessung nur eine Entfernung bis zur Position 17 (siehe Figur 5) vom Leck 5 erkannt werden kann.

Wird hingegen ein ESA-Wert 14 nach der erfindungsgemäßen Formel gebildet, ist es möglich, dass auch in größeren Entfernungen, nämlich zwischen den Positionen 17 und 18 nach Figur 5, das Leck noch erkannt wird.

Dies zeigt die Figur 5, wo erkennbar ist, dass der Geräuschpegel 11 über die Entfernung von dem Leck 5 auftragen ist und gleichzeitig auch die Frequenz 12 dargestellt ist.

Bei herkömmlichen Geräuschpegelmessungen war hierbei der Schwellenwert 13 für die Erfassung des Lecks maßgebend und aus Figur 5 ist erkennbar, dass zwischen den Positionen 17 und 18 bei herkömmlicher Geräuschpegelmessung eine Entdeckung des Lecks nicht mehr möglich ist.

Die Figur 5 zeigt deshalb auf der rechten Seite eine dreiecksförmige Verbesserungskurve 16, die deutlich macht, dass auch zwischen den Positionen 17 und 18 bei der Auswertung des ESA-Wertes noch eine Leckerkennung bei größeren Entfernung vom Leck möglich ist.

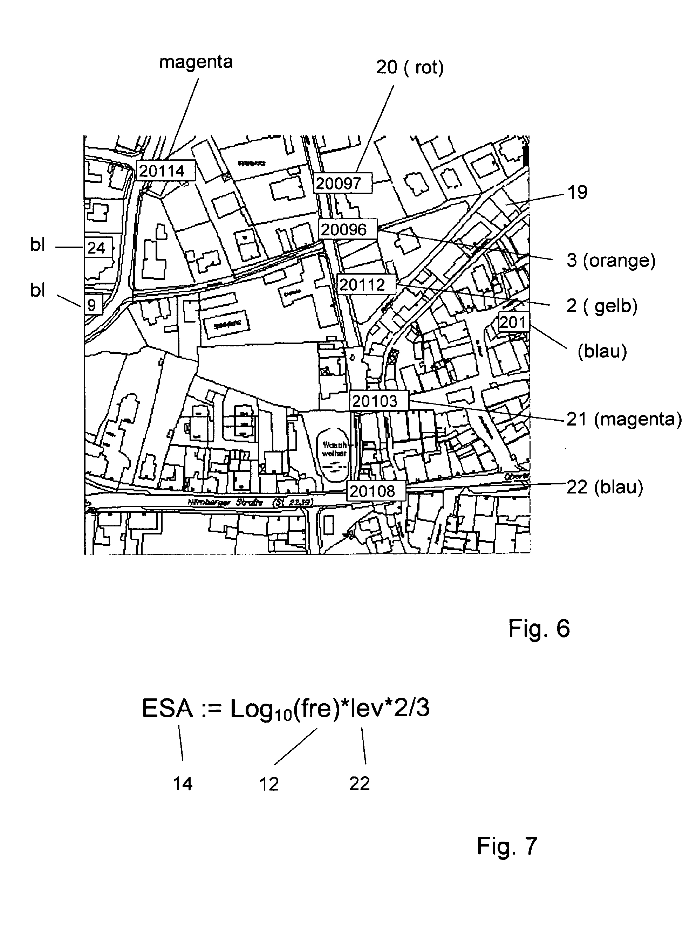

Die Figur 6 zeigt eine Umgebungskarte 19 einer Ortschaft, in der eine zu überwachende Rohleitung 4 angeordnet ist, wobei eine Anzahl von Geräuschdatenloggern 2, 3, 20, 21, 22 entlang dieser Rohrleitung 4 angeordnet sind.

Wenn nun auf der Höhe des Geräuschdatenloggers 2 ein Leck entsteht, dann wird - weil der Geräuschdatenlogger 2 diesem Leck am nächsten liegt - diesem Geräuschdatenlogger 2 der höchste ESA-Wert 14 zugeordnet, was auf der Umgebungskarte als gelbe Einfärbung des dort angeordneten Geräuschdatenloggers mit der Nummer 20112 markiert wird.

Der stromabwärts gelegene weitere Geräuschdatenlogger 3 mit der Nummer 20096 erhält hingegen eine orange Einfärbung auf der Darstellungskarte, um deutlich zu machen, dass er vom Leck weiter entfernt ist. Der mit der Nummer 20097 als weiterer Geräuschdatenlogger 20 auf der Karte angegebene Ort wird dann z. B. rot eingefärbt, um deutlich zu machen, dass dieser Geräuschdatenlogger 20 noch weiter vom Leck entfernt ist.

Der stromaufwärts angeordnete Geräuschdatenlogger 21 erhält hingegen eine magenta-rote Farbe, um deutlich zu machen, dass er sich ebenfalls in der Nähe des Lecks 5 befindet.

Der Geräuschdatenlogger 22 mit der Nummer 20108 erhält beispielsweise eine blaue Einfärbung, weil er keinen kritischen ESA-Wert erhält.

Gleiches gilt für den Geräuschdatenlogger mit der Nummer 20114 und die weiter links außen nur teilweise dargestellten Geräuschdatenlogger, die alle blau eingefärbt sind.

Damit wird klar, dass für den Benutzer eine schnelle, graphisch gut überblickbare Situation einer Rohrleitung 4 gegeben ist, wenn er die den Geräuschdatenloggern zugeordneten ESA-Werte betrachtet und gleichzeitig den Ort der Geräuschdatenlogger auf der Umgebungskarte 19 ansieht.

Es kann dann sehr schnell eine Feinortung in der Nähe des den höchsten ESA-Wertes 14 aufweisenden Geräuschdatenloggers 2 stattfinden und das Leck sehr schnell erkannt werden.

Die erfindungsgemäße Formel ist nachfolgend wiedergegeben.

$$ESA := Log_{10}(fre)*lev*2/3$$

und in Figur 7 separat angegeben.

Nach der angegebenen Formel besteht somit der neue ESA-Wert aus einer Multiplikation des dekadischen Logarithmus der Frequenz 12 mit dem Geräuschpegel 11 und einem konstanten Faktor.

Der an letzter Stelle genannte Faktor ist lediglich ein Skalierungsfaktor, der den ermittelten ESA-Wert 14 auf einen bestimmten Bereich skaliert.

Statt des Faktors 2/3 können auch andere Faktoren wie z. B. 3/5 oder 1/3 verwendet werden. Ebenso kann der Faktor auch eine ganze Zahl sein.

Aus den folgenden Berechnungen für den Pegel lev und die Frequenz fre wird der ESA-Wert berechnet

Ermittlung des Geräuschpegels 11

Der Geräuschpegel 11 des Lecks wird über einen Beschleunigungssensor (Körperschallmikrofon) am Ort des Geräuschdatenloggers 2, 3, 20-22 ermittelt, das jeweilig ermittelte Amplitudensignal wird anschließend digital gewandelt und im Controller des Geräuschdatenloggers 2, 3, 20-22 eingelesen. Der Geräuschpegel 11 (nachfolgend auch als "lev" bezeichnet) wird dann wie folgt berechnet:

a) an sei ein Abtastwert des Geräuschpegels

b) Zusammenfassung eines Blocks N von beispielsweise 1024 aufeinanderfolgenden Abtastwerten des Geräuschsignals (Zeitsignal)

c) Der Pegel *lev* wird dann als Logarithmus zur Basis 10 des Effektivwertes der Zeitsignalamplitude berechnet:

$$lev = 20 \times log_{10} \sqrt{\frac{\sum_{n=1}^{1024} a_n^2}{1024}}$$

d) Die Einheit des Pegel wird in "dB" angegeben.

Ermittlung der Frequenz 12 des Geräusches

Zur Berechnung der Frequenz 12 wird die Frequenz mit der größten Spektralamplitude ermittelt. Die Spektralamplitude ergibt sich hierbei in allgemein gebräuchlicher Weise aus dem Amplituden- und Phasenspektrum der komplexen Fourier-Reihe. Die sich daraus ergebenden Spektralamplituden des einseitigen Spektrums sind messbar und stimmen mit den Koeffizienten der reellen Cosinus-Form überein. Die Koeffizienten (Spektralamplituden) der Fourier-Reihe ohne Gleichstromglied entsprechen der Gleichung:

$$U_n = 2\hat{u}\,\frac{\tau}{T}\,\frac{\sin\dfrac{n\pi\tau}{T}}{\dfrac{n\pi\tau}{T}}$$

a) Der unter 1. b) ermittelte Block von Abtastwerten des Geräuschwertes wird einer FFT unterworfen und in den Frequenzbereich transformiert

b) Für jede Stützstelle wird aus dem Imaginär- und Realteil der Betrag gebildet. Dieser Betrag stellt die Spektralamplitude der jeweiligen Frequenz dar.

c) Die Frequenz der Stützstelle mit der höchsten Amplitude im Gesamtspektrum wird als Frequenz *fre* des Signals betrachtet.

d) Die Einheit der Frequenz wird in "Hz" angegeben.

## Zeichnungslegende

1. Messfahrzeug
2. Geräuschdatenlogger
3. Geräuschdatenlogger
4. Rohrleitung
5. Leck
6. Erdreich
7. Datenübertragung
8. Datenübertragung
9. Logger-ID
10. Logger-ID
11. Geräuschpegel
12. Frequenz
13. Schwellenwert
14. ESA-Wert
15. Pegel-Wert
16. Verbesserungskurve
17. Position
18. Position
19. Umgebungskarte
20. Geräuschdatenlogger
21. Geräuschdatenlogger
22. Geräuschdatenlogger

## Patentansprüche

1. Verfahren zur akustischen Ortung von Lecks in unter- oder oberirdisch verlegten Leitungen (4), bei dem mindestens zwei das Leckgeräusch aufnehmende, und im gegenseitigem Abstand voneinander angeordnete Geräuschdatenlogger (2, 3; 20-22) in Körperkontakt mit der zu untersuchenden Leitung gebracht werden und zeitgleich den Geräuschpegel (dB) und die Frequenz (Hz) einer Leckage messen, **dadurch gekennzeichnet, dass** die beiden gemessenen Werte der Frequenz (12) und des Geräuschpegels (11) zu einem einzigen Wert (ESA) zusammengefasst werden, wobei der ESA-Wert (14) berechnet wird aus dem Dezimal-Logarithmus der Frequenz (12) des Leckgeräusches multipliziert mit dem logarithmischen Pegelwert (11) des Leckgeräusches multipliziert mit einem konstanten Faktor.

2. Verfahren nach Anspruch 1, **dadurch gekennzeichnet, dass** das der ESA-Wert nach folgender Formel berechnet wird, wobei der konstante Faktor den Wert 2/3 hat:

$$ESA := \mathrm{Log}_{10}(fre)*lev*2/3$$

3. Verfahren nach Anspruch 1 oder 2, **dadurch gekennzeichnet, dass** der Geräuschpegel (11) des Lecks über einen Beschleunigungssensor am Ort des Geräuschdatenloggers 2, 3, 20-22 ermittelt, dass jeweilig ermittelte Amplitudensignal anschließend digital gewandelt und im Controller des Geräuschdatenloggers 2, 3, 20-22 eingelesen und nach der Formel:

$$lev = 20 \times log_{10} \sqrt{\frac{\sum_{n=1}^{1024} a_n{}^2}{1024}}$$

berechnet wird.

4. Verfahren nach einem der Ansprüche 1 bis 3, **dadurch gekennzeichnet, dass** die Frequenz (12) des Geräuschpegels (11) aus einer Fast-Fourier-Transformation (FFT) gewonnen wird, deren Eingangsgröße einem Block von Abtastwerten des Geräuschwertes entspricht und an deren Ausgang der so ermittelte Wert in einen Frequenzbereich transformiert wird,
dass für jede Stützstelle aus dem Imaginär- und Realteil der absolute Betrag gebildet wird
und dass die Frequenz der Stützstelle mit dem höchsten Betrag als Frequenz (12) fre des Signals betrachtet wird.

5.   Verfahren nach einem der Ansprüche 1 bis 4, **dadurch gekennzeichnet, dass** dem pro Geräuschdatenlogger (2, 3; 20-22) erfassten ESA-Wert in Abhängigkeit von seinem absoluten Wert eine Farbe oder eine Helligkeitsabstufung auf einer grafischen Darstellung zugeordnet wird und dass die grafische Darstellung den geografischen Einbauort der Geräuschdatenlogger (2, 3; 20-22) längs der Rohleitung abbildet.

6.   Verfahren nach Anspruch 1 oder 2, **dadurch gekennzeichnet, dass** der ESA-Wert die Leckwahrscheinlichkeit sowie die Leckposition im Verhältnis zu anderen Loggern (2, 3; 20-22) sichtbar macht.

7.   Verfahren nach einem der Ansprüche 1 bis 3, **dadurch gekennzeichnet, dass** eine permanente Rohrnetzüberwachung der als Trinkwasserleitung ausgebildeten Rohrleitung (4) erfolgt.

Fig. 1

Fig. 2

EP 2 568 272 A2

**Fig. 5**
Geräusch im Rohrnetz

11 Geräuschpegel

13 Schwellenwert bei Geräuschpegel-messung

16

Frequenz
12

Leck

17 Entfernung zum Leck

18

**Fig. 4**
Größtmögliche Messdistanz bei traditioneller Geräuschpegelmessung.

15   14

**Fig. 3**
Deutlich größere Messdistanz und Genauigkeit der Leckaussage bei Einbeziehung der Frequenzauswertung !

5    4        2

magenta     20 ( rot)

Fig. 6

$$ESA := Log_{10}(fre)*lev*2/3$$

14   12   22

Fig. 7